# EUROPEAN PATENT APPLICATION

(11) **EP 2 937 265 A1**
(43) Date of publication of application: **28.10.2015**
(21) Application number: 15163197.5
(22) Date of filing: 10.04.2015
(51) Int. Cl.: B62D 3/12

(54) **RACK SHAFT AND METHOD FOR MANUFACTURING RACK SHAFT**

(30) Priority: 18.04.2014 JP 2014086711
(71) Applicant: JTEKT CORPORATION, Osaka-shi Osaka 542-8502 (JP)
(72) Inventor: Suzuki, Masateru, Osaka-shi, Osaka, 542-8502 (JP)
(74) Representative: Winter, Brandl, Fürniss, Hübner, Röss, Kaiser, Polte - Partnerschaft mbB

(57) **Abstract**

A rack shaft used for a dual-pinion electric power steering apparatus includes: a hollow first shaft in which a first rack for transmission of manual steering force is formed; and a solid second shaft in which a second rack for transmission of steering assist force is formed and which is coupled to the first shaft. A method for manufacturing a rack shaft includes: forming a first rack in a hollow first shaft by plastic working; coupling a solid second shaft to the first shaft after the plastic working; and forming a second rack in the second shaft by cutting after the coupling.

## Description

### BACKGROUND OF THE INVENTION

### 1. Field of the Invention

The invention relates to a rack shaft and a method for manufacturing the rack shaft.

### 2. Description of Related Art

As an electric power steering apparatus, what is called a single-pinion electric power steering apparatus is known in which steering force from a steering wheel and the steering assist force of an electric motor are transmitted to a rack shaft in a steering mechanism via the same pinion. A single-pinion electric power steering apparatus is proposed in Japanese Patent Application Publication No. 2012-240563 (JP 2012-240563 A). In JP 2012-240563 A, a portion of the rack shaft in which a rack meshing with a pinion is formed is a solid shaft, and a portion of the rack shaft with no rack formed therein is a hollow shaft.

Japanese Patent Application Publication No. 2006-103644 (JP 2006-103644 A) proposes a method for manufacturing a rack shaft that is hollow as a whole using a steel pipe.

As the electric power steering apparatus, what is called a dual-pinion electric power steering apparatus is known in which steering force from a steering wheel and the steering assist force of an electric motor are transmitted to a rack shaft in a steering mechanism via different pinions. In the rack shaft used for the dual-pinion electric power steering apparatus, two racks are formed which mesh with two pinions, respectively.

The dual-pinion electric power steering apparatus is heavy when a generally solid rack shaft is used. Furthermore, in the dual-pinion electric power steering apparatus, when the rack shaft in JP 2006-103644 A, which is hollow as a whole, is used, a desired meshing strength is difficult to be achieved. Furthermore, when the rack shaft in JP 2012-240563 A is applied to a dual-pinion electric power steering apparatus, the rack shaft needs two solid shaft portions with a rack formed therein and three hollow shaft portions arranged such that each solid shaft portions is sandwiched between the hollow shaft portions in an axial direction. This increases the number of components of the apparatus and the number of assembly steps needed, leading to increased manufacturing costs.

### SUMMARY OF THE INVENTION

An object of the present invention is to provide a rack shaft in a dual-pinion electric power steering apparatus, which enables a reduction in manufacturing costs while maintaining a sufficient strength, and a method for manufacturing the rack shaft.

According to an aspect of the present invention, a rack shaft used for a dual-pinion electric power steering apparatus includes: a hollow first shaft in which a first rack for transmission of manual steering force is formed; and a solid second shaft in which a second rack for transmission of steering assist force is formed and which is coupled to the first shaft.

### BRIEF DESCRIPTION OF THE DRAWINGS

The foregoing and further features and advantages of the invention will become apparent from the following description of exemplary embodiments with reference to the accompanying drawings, wherein like numerals are used to represent like elements and wherein:
FIG. 1 is a schematic diagram depicting a general configuration of an electric power steering apparatus according to an embodiment of the present invention;
FIG. 2 is a schematic diagram depicting a step of plastic working of a cylindrical shaft in the process of manufacturing the rack shaft;
FIG. 3 is a schematic diagram depicting the cylindrical shaft after plastic working in the process of manufacturing the rack shaft;
FIG. 4 is a schematic diagram depicting a state in which a rack forming die is set on a first shaft in which a first rack has not been formed in the process of manufacturing the rack shaft;
FIG. 5 is a schematic diagram depicting a step in which the first rack is formed in the first shaft in the plastic working step;
FIG. 6 is a diagram depicting a coupling step in the process of manufacturing the rack shaft;
FIG. 7 is a diagram depicting a first shaft and a second shaft after a coupling step; and
FIG. 8 is a diagram depicting a cutting step in the process of manufacturing the rack shaft.

### DETAILED DESCRIPTION OF EMBODIMENTS

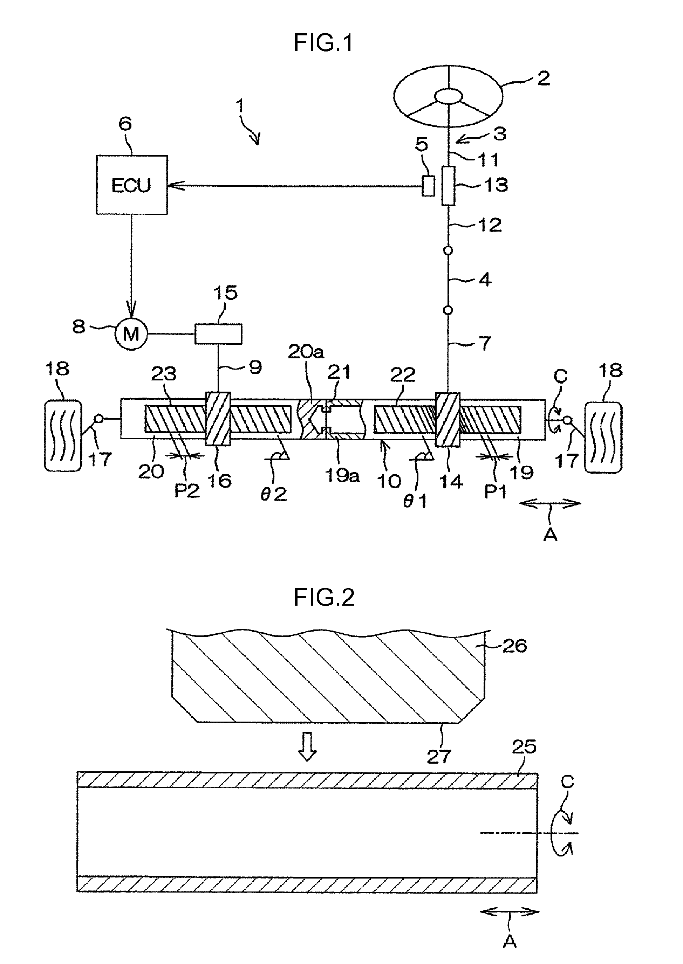

An embodiment of the present invention will be described below in detail with reference to the attached drawings. FIG. 1 is a schematic diagram depicting a general configuration of an electric power steering apparatus 1 of the present embodiment of the present invention. As seen in FIG. 1, the electric power steering apparatus 1 mainly includes a steering shaft 3 to which a steering wheel 2 is coupled, an intermediate shaft 4, a torque sensor 5, an electronic control unit (ECU) 6, a first pinion shaft 7, an electric motor 8, a second pinion shaft 9, and a rack shaft 10. The first pinion shaft 7 transmits manual steering force from the steering wheel 2 to the rack shaft 10. The second pinion shaft 9 transmits steering assist force from the electric motor 8 for steering assistance to the rack shaft 10. The electric power steering apparatus 1 is what is called a dual-pinion electric power steering apparatus.

The steering wheel 2 and the first pinion shaft 7 are mechanically coupled together via the steering shaft 3 and the intermediate shaft 4. The steering shaft 3 extends linearly. Furthermore, the steering shaft 3 includes an input shaft 11 coupled to the steering wheel 2 and an output shaft 12 coupled to the intermediate shaft 4. The input shaft 11 and the output shaft 12 are coupled together via a torsion bar 13 so as to be rotatable relative to each other on the same axis. When manual steering force is applied to the steering wheel 2, the torsion bar 13 is twisted. Thus, the input shaft 11 and the output shaft 12 are adapted to rotate relative to each other in accordance with the amount of twist of the torsion bar 13.

A torque sensor 5 is disposed around the steering shaft 3. The torque sensor 5 detects steering torque applied to the steering wheel 2 based on the relative rotational displacement of the input shaft 11 and the output shaft 12. The steering torque detected by the torque sensor 5 is input to the ECU 6. The first pinion shaft 7 is coupled to the intermediate shaft 4. The first pinion shaft 7 is adapted to rotate in conjunction with steering of the steering wheel 2. A first pinion 14 is coupled to a tip (in FIG. 1, a lower end) of the first pinion shaft 7.

The electric motor 8 and the second pinion shaft 9 are coupled together via a speed reduction mechanism 15 that allows the steering assist force of the electric motor 8 to be transmitted to the second pinion shaft 9. A second pinion 16 is coupled to a tip (in FIG. 1, a lower end) of the second pinion shaft 9. The electric motor 8 is controlled by the ECU 6. The ECU 6 controls the electric motor 8 based on the steering torque detected by the torque sensor 5.

The rack shaft 10 extends linearly along a lateral direction (the direction orthogonal to a straight-ahead travel direction) of an automobile. An axial direction of the rack shaft 10 is denoted by reference character "A". A circumferential direction of the rack shaft 10 is denoted by reference character "C". A steered wheel 18 is coupled to each end of the rack shaft 10 via a tie rod 17 and a knuckle arm (not depicted in the drawings). The rack shaft 10 includes a hollow first shaft 19 and a solid second shaft 20 coupled to the first shaft 19. One end (in FIG. 1, a left end) of the first shaft 19 in the axial direction A is denoted by reference character "19a". The other end (in FIG. 1, a right end) of the second shaft 20 in the axial direction A is denoted by reference character "20a". The axial ends 19a and 20a of the first shaft 19 and the second shaft 20 are integrally coupled together at a substantially central portion of the rack shaft 10 in the axial direction A. Specifically, the first shaft 19 is joined to the end 20a of the second shaft 20 by friction welding or the like (described later in detail) to form a junction area 21, providing the rack shaft 10 as a whole.

A first rack 22 for transmission of manual steering force is formed in the first shaft 19. The first rack 22 includes stripe-shaped teeth arranged along the axial direction A. The first rack 22 is what is called a variable rack in which at least one of a tooth pitch P1 and a tooth angle θ1 with respect to the axial direction A varies with the position in the axial direction A. For formation of the variable rack, the use of cutting such as broaching that is excellent in productivity and processability is not preferable, and thus, plastic working such as forging is used. In the present embodiment, the tooth pitch P1 of the first rack 22 varies with the position in the axial direction A. Specifically, the tooth pitch P1 decreases gradually toward a central portion of the first rack 22 in the axial direction A.

A second rack 23 for transmission of steering assist force is formed in the second shaft 20. The second rack 23 includes stripe-shaped teeth arranged along the axial direction A. The second rack 23 is what is called a constant rack in which both a tooth pitch P2 and a tooth angle θ2 with respect to the axial direction A are constant. The constant rack is formed by cutting such as broaching.

The first rack 22 meshes with a first pinion 14. The second rack 23 meshes with a second pinion 16. The first pinion 14 and the first rack 22 form a first rack and pinion mechanism 14 and 22. Rotation from the steering wheel 2 is transmitted to the first pinion shaft 7 via the steering shaft 3 and the intermediate shaft 4. Rotation of the first pinion shaft 7 is transmitted to the first rack 22 via the first pinion 14. Thus, manual steering force from the steering wheel 2 is transmitted to the first rack 22. Furthermore, the first rack and pinion mechanism 14 and 22 converts the rotation from the first pinion shaft 7 into axial movement of the rack shaft 10. Consequently, the steered wheels 18 are turned.

The second pinion 16 and the second rack 23 provide a second rack and pinion mechanism 16 and 23. When the electric motor 8 is rotationally driven, rotation from the electric motor 8 is transmitted to the second pinion shaft 9 via the speed reduction mechanism 15. Rotation of the second pinion shaft 9 is transmitted to the second rack 23 via the second pinion 16. Thus, the steering assist force from the electric motor 8 is transmitted to the second rack 23. The second rack and pinion mechanism 16 and 23 converts the rotation from the second pinion shaft 9 into axial movement of the rack shaft 10. Consequently, the steered wheels 18 are turned. The steering assist force is greater than the manual steering force, and thus, a heavier load is imposed on the second shaft 20 than on the first shaft 19.

Now, a method for manufacturing the rack shaft 10 used for the dual-pinion electric power steering apparatus as described above will be described. In an initial stage of a process of manufacturing the rack shaft 10, a plastic working step is executed. In the plastic working step, the first rack 22 is formed in the hollow first shaft 19 by plastic working.

FIG. 2 is a schematic diagram depicting a step of plastic working of a cylindrical shaft 25 in the process of manufacturing the rack shaft 10.

First, as depicted in FIG. 2, the hollow cylindrical shaft 25, serving as a raw material for forming the first shaft 19, is prepared by means of rolling or the like. The cylindrical shaft 25 is formed of steel or the like. Then, a flat surface 27 of a die 26 is pressed against an outer peripheral surface (strictly speaking, a portion of the outer peripheral surface in the axial direction A and the circumferential direction C) from outside in a radial direction of the cylindrical shaft 25. The flat surface 27 is parallel to the axial direction A of the cylindrical shaft 25.

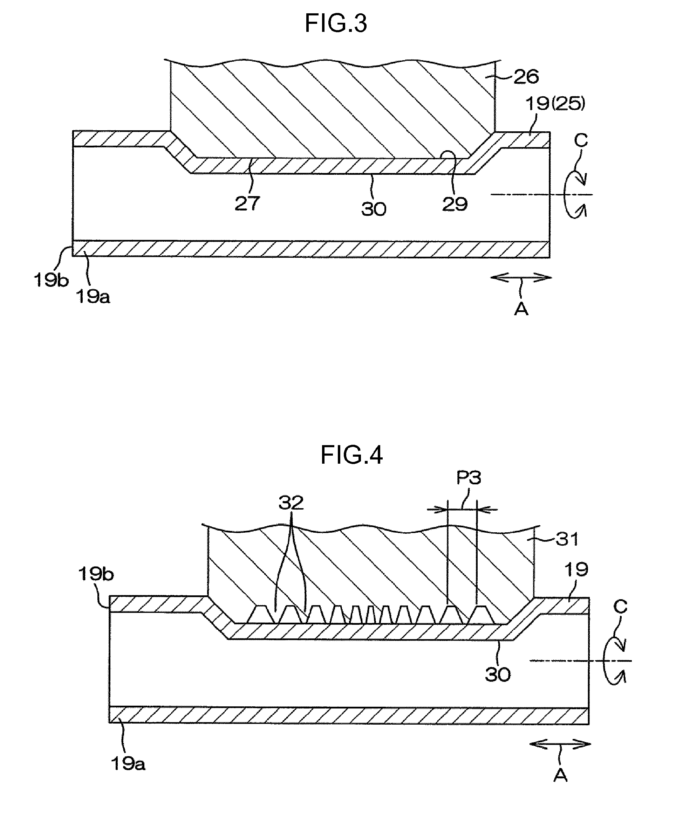

FIG. 3 is a schematic diagram depicting the cylindrical shaft 25 after plastic working in the process of manufacturing the rack shaft 10. As seen in FIG. 3, plastic working causes the portion of the outer peripheral surface of the cylindrical shaft 25 in the axial direction A and the circumferential direction C to be recessed inward in the radial direction. Thus, the first shaft 19 is formed which has a flat surface 29 in the portion of the outer peripheral surface of the cylindrical shaft 25. The flat surface 29 is parallel to the axial direction A of the first shaft 19 in which the first rack 22 has not been formed. In conjunction with formation of the flat surface 29, the inner peripheral surface of the portion of the first shaft 19, in which the flat surface 29 is formed, bulges inward in the radial direction of the cylindrical shaft 25 to form a flat surface 30. The flat surface 30 is parallel to the axial direction A of the first shaft 19. An end surface on one side of the first shaft 19 in the axial direction A is denoted by reference character "19b".

FIG. 4 is a schematic diagram depicting a state in which a rack forming die 31 is set on a first shaft 19 in which a first rack 22 has not been formed in the process of manufacturing the rack shaft 10. As seen in FIG. 4, then, the die 26 is removed from the flat surface 29 of the first shaft 19, and the first shaft 19 is placed on the rack forming die 31. A rack forming portion 32 is formed in a portion of the rack forming die 31 that faces the flat surface 29. The rack forming portion 32 is shaped like a stripe arranged along the axial direction A. In the rack forming portion 32, at least one of a tooth pitch P3 and the tooth angle (not depicted in the drawings) with respect to the axial direction varies with the position in the axial direction A. The tooth pitch P3 decreases toward a central portion of the rack forming portion 32 in the axial direction A.

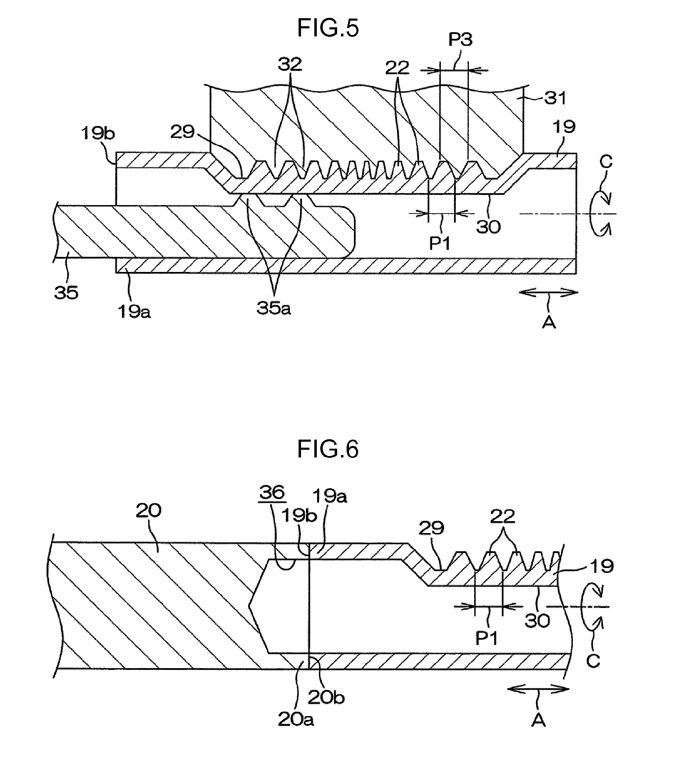

FIG. 5 is a schematic diagram depicting a step in which the first rack 22 is formed in the first shaft 19 in the plastic working step. As seen in FIG. 5, after the rack forming die 31 is set on the first shaft 19, a cylindrical mandrel 35 is pushed into the first shaft 19 with the rack forming portion 32 of the rack forming die 31 being in contact with the flat surface 30 of the first shaft 19.

Protruding portions 35a are provided on an outer peripheral surface of the mandrel 35. The protruding portions 35a are disposed at positions corresponding to the flat surface 30 of the first shaft 19 in the circumferential direction C. The mandrel 35 is reciprocated in the axial direction A to cause the protruding portions 35a to squeeze the flat surface 30. Thus, the flat surface 29 is raised outward in the radial direction of the first shaft 19. The mandrel 35, with the size thereof changed little by little, is reciprocated in the axial direction A a plurality of times so that the flat surface 29 is gradually deformed to fit the rack forming portion 32 of the rack forming die 31. Thus, the first rack 22 fitting the rack forming portion 32 is formed on the flat surface 29. The tooth pitch P1 of the thus formed first rack 22 is the same as the tooth pitch P3 of the rack forming portion 32. As described above, the first rack 22 is formed by plastic working.

After the plastic working step, a coupling step is executed in which the second shaft 20 is coupled to the first shaft 19. FIG. 6 is a diagram depicting the coupling step in the process of manufacturing the rack shaft 10. Possible techniques for the coupling step include friction welding, serration fitting, and soldering. In this case, friction welding that allows accurate alignment is preferably used.

As seen in FIG. 6, first, the second shaft 20 in which the second rack 23 has not been formed is prepared. A recessed portion 36 that is circular, for example, in cross section is formed in an end surface 20b on the other side of the second shaft 20 in the axial direction A. The recessed portion 36 is coaxial with the second shaft 20. Thus, the end 20a of the second shaft 20 in the axial direction A is cylindrical. The second shaft 20 is arranged coaxially with the first shaft 19. Then, pressure is applied to the first shaft 19 and the second shaft 20 with the end surfaces 19b and 20b thereof in the axial direction A in contact with each other. Furthermore, each of the end surfaces 19b and 20b is preferably a flat surface perpendicular to the axial direction A. In this case, the first shaft 19 and the second shaft 20 can be evenly pressed.

Then, while pressure is applied to the first shaft 19 and the second shaft 20, the first shaft 19 and the second shaft 20 are rotated relative to each other in the circumferential direction C. At this time, the number of rotations is preferably 2,000 rpm. The relative rotation causes generation of frictional heat (approximately 1,300°C). The frictional heat allows the first shaft 19 and the second shaft 20 to be joined (welded) together.

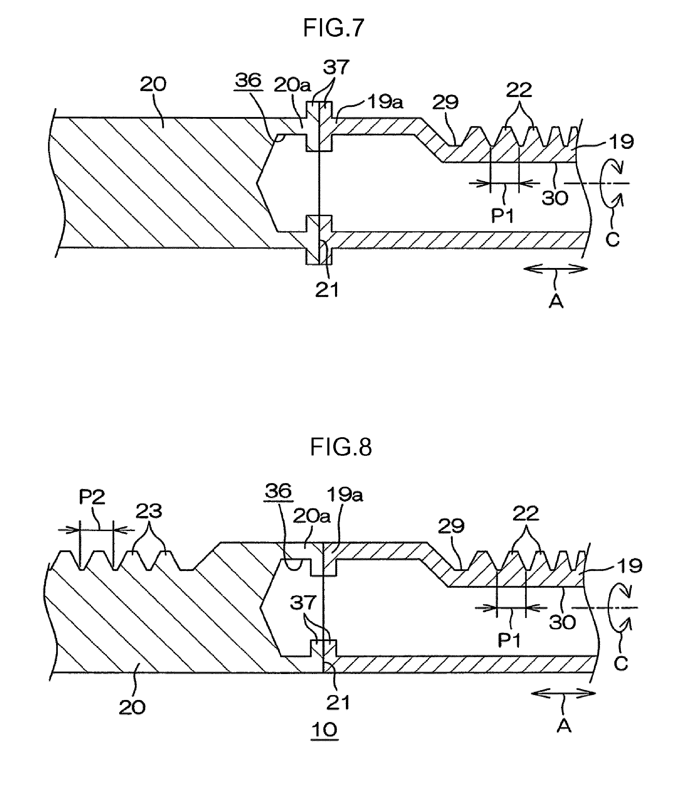

As described above, the end 19a, an axial end of the first shaft 19, and the end 20a, an axial end of the second shaft 20, are coupled together in the friction welding step to complete the coupling of the second shaft 20 to the first shaft 19. FIG. 7 is a diagram depicting the first shaft 19 and the second shaft 20 after the coupling step. In the friction welding step in FIG. 6, the end 19a of the first shaft 19 and the end 20a of the second shaft 20 that are melted by frictional heat are pressed against each other. Thus, when the friction welding step is complete, a flange portion 37 extending outward and inward in the radial direction of the first shaft 19 (the radial direction of the second shaft 20) is formed at the end 19a and the end 20a which are integrally joined together via the junction area 21, as depicted in FIG. 7.

After the coupling step, a cutting step is executed in which the second rack 23 is cut into the second shaft 20. FIG. 8 is a diagram depicting the cutting step in the process of manufacturing the rack shaft 10. As seen in FIG. 8, first, in the cutting step, a portion located at the flange portion 37 and projecting outward in the radial direction of the first shaft 19 is cut using a lathe or the like. Thus, the outer peripheral surface of the first shaft 19 and the outer peripheral surface of the second shaft 20 are smoothly connected together.

Then, cutting is performed by using a broaching machine or the like to cut a portion of the outer peripheral surface of the second shaft 20 in the axial direction A and the circumferential direction C. Thus, the second rack 23 with the constant tooth pitch P2 in the axial direction A is formed. With the above-described manufacturing process, the rack shaft 10 is thus manufactured. In a comparative example in which a rack shaft that is hollow over the entire length thereof is formed by forging, a blank (raw material) is plastically deformed into a die shape. Thus, when a large rack (teeth) is to be formed, the raw material needs to be significantly plastically deformed, leading to degraded productivity and processability of the rack shaft. That is, forming large teeth is difficult. Meshing strength that is the strength of a portion where the teeth mesh with each other depends on the area of the portion where the teeth mesh with each other. Thus, the meshing between the teeth formed by forging has difficulty achieving the desired meshing strength.

On the other hand, in the friction welding step used to manufacture the rack shaft 10, only the axial ends 19a and 20a of the first shaft 19 and the second shaft 20 are heated and melted. Thus, in the junction area 21 between the first shaft 19 and the second shaft 20, distortion is less likely to occur. Hence, the first shaft 19 and the second shaft 20 are coupled together with high coaxiality. In the friction welding step, it is generally difficult to secure accuracy in the circumferential direction C. In the present embodiment, the first shaft 19 in which the first rack 22 has been formed and the second shaft 20 in which the second rack 23 has not been formed are integrally coupled together in the friction welding step, and then, the second rack 23 is formed by cutting. Consequently, the accuracy of alignment of the first rack 22 and the second rack 23 in the circumferential direction C is not affected by friction welding. Therefore, the accuracy of the relative positions of the first rack 22 and the second rack 23 in the circumferential direction C is improved.

Hence, the accuracy of the relative positions of the racks 22 and 23 can be improved. Furthermore, in the rack shaft 10 in the present embodiment, the second shaft 20, which is used to transmit steering assist force and on which a relatively high load is imposed, is solid and can secure a sufficient strength (particularly a meshing strength). On the other hand, the first shaft 19, which is used to transmit manual steering force and on which a relatively low load is imposed, is hollow but has a sufficient strength.

Therefore, the rack shaft 10 that is used for the dual-pinion electric power steering apparatus 1 has a sufficient strength as a whole and enables a reduction in manufacturing costs. Thus, for the dual-pinion electric power steering apparatus 1, the manufacturing costs can be reduced with a sufficient strength of the rack shaft 10 maintained.

Furthermore, the second rack 23 with the constant tooth pitch P2 is formed in the second shaft 20 by cutting. Thus, the tooth pitch P2 of the second rack 23 can be freely selected as needed. The first rack 22, which is a variable rack, is formed in the first shaft 19 by plastic working. Thus, the variable rack (first rack 22), which is difficult to form by cutting, can be easily formed. Specifically, when cutting is used, the first rack 22 with a complicated shape needs to be formed in each rack shaft 10 by cutting. However, plastic working allows a large number of rack shafts 10 to be manufactured using the rack forming die 31 as long as the rack forming portion 32 is formed in the rack forming die 31. As a result, manufacturing costs can be reduced.

The present invention is not limited to the above-described embodiment. Various changes may be made to the embodiment without departing from the scope of the invention. For example, the first rack 22 may be a constant rack instead of the variable rack. Furthermore, the second rack 23 may be a variable rack instead of the constant rack.

According to the present invention, for a dual-pinion electric power steering apparatus, the manufacturing costs can be reduced with a sufficient strength of a rack shaft maintained.

## Claims

1. A rack shaft used for a dual-pinion electric power steering apparatus, the rack shaft comprising:
a hollow first shaft in which a first rack for transmission of manual steering force is formed; and
a solid second shaft in which a second rack for transmission of steering assist force is formed and which is coupled to the first shaft.

2. The rack shaft according to claim 1, wherein
the second rack has a constant tooth pitch, and is formed by cutting.

3. The rack shaft according to claim 1 or 2, wherein
in the first rack, at least one of a tooth pitch and a tooth angle with respect to an axial direction of the rack shaft varies with a position on the rack shaft in the axial direction, and the first rack is formed by plastic working.

4. A method for manufacturing a rack shaft used for a dual-pinion electric power steering apparatus, the method comprising:
forming a first rack in a hollow first shaft by plastic working;
coupling a solid second shaft to the first shaft after the plastic working; and
forming a second rack in the second shaft by cutting after the coupling.

5. The method for manufacturing a rack shaft according to claim 4, wherein
the first rack is used to transmit manual steering force, and the second rack is used to transmit steering assist force.

6. The method for manufacturing a rack shaft according to claim 4 or 5, wherein
in the coupling, an axial end of the first shaft and an axial end of the second shaft are coupled together by friction welding.
